Europäisches Patentamt

European Patent Office

Office européen des brevets

(19)

(11) Publication number: **0 513 816 A2**

## (12) EUROPEAN PATENT APPLICATION

(21) Application number: **92108235.0**

(22) Date of filing: **15.05.92**

(51) Int. Cl.5: **C08F 6/00**

(30) Priority: **17.05.91 US 701999**

(43) Date of publication of application:
**19.11.92 Bulletin 92/47**

(84) Designated Contracting States:
**AT BE CH DE DK ES FR GB GR IT LI NL SE**

(71) Applicant: **UNION CARBIDE CHEMICALS & PLASTICS TECHNOLOGY CORPORATION**
**39 Old Ridgebury Road**
**Danbury, Connecticut 06817-0001(US)**

(72) Inventor: **Bernier, Robert Joseph**
**266 Reaville Road**
**Flemington, New Jersey 08822(US)**
Inventor: **Rhee, Aaron Seung-Joon**
**7 Apple Hill Road**
**Belle Mead, New Jersey 08502(US)**
Inventor: **Wang, Duan-Fan**
**39 Van Zandt Drive**
**Somerville, New Jersey 08876(US)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**W-8000 München 40(DE)**

(54) **Degassing process for removing unpolymerized monomers from olefin polymers.**

(57) A process for removing unpolymerized gaseous monomers from a solid olefin polymer containing said gaseous monomers by feeding an inert purge gas through a vessel containing grid plates and countercurrently contacting the solid polymer under expanded bed conditions.

EP 0 513 816 A2

## 1. Field of the Invention

The present invention relates to a process for removing unpolymerized gaseous monomers from solid olefin polymers, and more particularly and in a preferred embodiment, to a process for removing unpolymerized gaseous hydrocarbon monomers from granular, low pressure-polymerized, low density ethylene polymers, particularly "sticky polymers" such as ethylene, propylene, diene terpolymers.

## 2. Description of the Prior Art

It has long been known that olefins such as ethylene can be polymerized by contacting them under polymerization conditions with a catalyst comprising a transition metal compound, e.g., titanium tetrachloride and a cocatalyst or activator, e.g., an organometallic compound such a triethyl aluminum. Catalysts of this type are generally referred to as Ziegler catalysts.

Low density ethylene polymers (i.e., ethylene polymers having a density of about 0.94 g/cc and lower) have in the past been made commercially by a high pressure (i.e., at pressures of 15,000 psi and higher) homopolymerization of ethylene in stirred and elongated tubular reactors in the absence of solvents using free radical initiators. Recently, low pressure processes for preparing low density ethylene polymers have been developed which have significant advantages as compared to the conventional high pressure process. One such low pressure process is disclosed in commonly assigned, U.S. Patent No. 4.302,565.

This patent discloses a low pressure, gas phase process for producing low density ethylene copolymers having a wide density range of about 0.91 to about 0.94 g/cc. More recently low density ethylene copolymers have been produced having densities of about 0.86 to about 0.96 g/cc.

The resulting granular polymers produced from conventional low pressure processes usually contain gaseous unpolymerized monomers including hydrocarbon monomers. These gaseous monomers should be removed from the granular resin for safety reasons, since there is a danger of explosion if the hydrocarbon monomer concentration becomes excessive in the presence of oxygen. In addition, proper disposal of the hydrocarbon is required in order to meet environmental standards concerning hydrocarbon emissions.

The prior art teaches techniques for removing volatile unpolymerized monomers from polymers of the corresponding monomers. See for example, U.S. Patent Nos. 4,197,399, 3,594,356 and 3,450,183.

More recently U.S. Patent No. 4,372,758 issued Feb. 8, 1983 to R.W. Bobst et al and which is assigned to a common assignee discloses, a degassing or purging process for removing unpolymerized gaseous monomers from solid olefin polymers. The purging process generally comprises conveying the solid polymer (e.g., in granular form) to a purge vessel and contacting the polymer in the purge vessel with a countercurrent inert gas purge stream to strip away the monomer gases which are evolved from the polymer.

Unfortunately, however, when producing certain types of ethylene polymers, such as "sticky polymers" certain problems are encountered because of the type of monomers to be removed. Although these sticky polymers can be rendered non-sticky in the reactor, see for example U.S. Patent 4,994,534 issued February 19, 1991, there still remains the problem of effectively removing diene monomers, e.g., ENB from the polymers during the purging process. For example, in producing ethylene, propylene, diene terpolymers, monomers such as ethylidene norbornene (ENB) monomers, the ENB remaining in the product must be substantially purged from the product due to cost and environmental considerations. However ENB has a significantly low diffusivity. If the traditional packed bed process is used, it would require an impractically long residence time or an extra large amount of purge gas. It is clear that the conventional packed bed process is not entirely suitable for ENB purging.

Thus, the versatility of the resin post-reaction treatment processes have not evolved at the pace of the gas phase reactor technology which has been extended to the production of fluidizable but non-free flowing solid polymer as disclosed in U.S. Patent No. 4,710,538 issued December 1, 1987. These non-free flowing granular resins are referred to sometimes as "sticky polymers" because of their tendency to aggregate in larger particles and to eventually form large chunks of solid polymer.

The term "sticky polymer" is defined as a polymer, which although particulate at temperatures below the sticking temperature, agglomerates at temperatures above the sticking temperature. The term "sticking temperature", which, in the context of this specification, concerns the sticking temperature of particles of polymer in a fluidized bed, is defined as the temperature at which fluidization ceases due to the agglomeration of particles in the bed. The agglomeration may be spontaneous or occur on short periods of settling.

A polymer may be inherently sticky due to its chemical or mechanical properties or pass through a sticky phase during the production cycle. Sticky polymers are also referred to as non-free flowing polymers because of their tendency to compact into aggregates of much larger size than the original particles and not flow out of the relatively small openings in the bottom of product discharge tanks or purge bins. Polymers of this type show acceptable fluidity in a gas phase fluidized bed reactor; however, once motion ceases, the additional mechanical force provided by the fluidizing gas passing through the distributor plate is insufficient to break up the aggregates which form and the bed will not refluidize. These polymers are classified as those, which have a minimum bin opening for free flow at zero storage time of two feet and a minimum bin opening for free flow at storage times of greater than five minutes of 4 to 8 feet or more.

Sticky polymers can also be defined by their bulk flow properties. This is called the Flow Function. On a scale of zero to infinity, the Flow Function of free flowing materials such as dry sand is infinite. The Flow Function of free flowing polymers is about 4 to 10, while the Flow Function of non-free flowing or sticky polymers is about 1 to 3.

Although many variables influence the degree of stickiness of the resin, it is predominantly governed by the temperature and the crystalinity of the resin. Higher temperatures of the resin increase its stickiness while less crystalline product such as very low density polyethylene (VLDPE), ethylene/propylene monomer (EPM), ethylene/propylene diene monomer (EPDM) and polypropylene (PP) copolymers usually display a larger tendency to agglomerate in larger particles.

The mechanical agitation of a fluid bed or stirred gas phase reactor is somewhat sufficient to prevent the agglomeration of sticky polymers in the vessel. However current post reactor processing and handling equipment utilized with gas phase reactors are not specifically designed to process sticky polymers. For example the conventional packed bed purging processes tend to have uneven gas distribution in the purge vessel. Purge gas seems to bypass through certain channels without contact with the majority of solids. It is submitted that this poor solid-gas contact condition in the conventional packed bed process is the primary reason that purging is at least one order of magnitude worse than theoretical prediction.

According to the present invention, it has been found that increasing the uniformity of solid-gas contact in the entire purge bin is the key to achieve excellent purging performance. To improve solid-gas contact, the inventors propose an expanded bed operation. The terms "expanded bed" or expanded fluidized bed as used herein means that substantially every single solid in the bed is lifted and supported by the drag force of the purge gas.

The term "packed bed" as used herein means that when the gas superficial velocity increases, the height of the resin bed increases slightly and the pressure drop of the resins increases proportionally to the gas superficial velocity. There are no sign of bubbles in the resin bed.

The term fluidized bed as used herein means that when the gas superficial velocity increases, the height of the resin bed and the pressure drop across the bed do not change. Bubbles travel through the whole bed and large scale bed circulation is observed.

The term expanded bed operation as used herein means that when the gas superficial velocity increases, the height of the resin bed increases significantly and the pressure drop across the resin bed increases proportionally to the gas superficial velocity. There is no sign of bubbles in the resin bed. Slight resin motion can be observed locally, but there is no large scale bed circulation.

Thus a solid bed is in a fully expanded mode when substantially every single solid in the bed is lifted and supported by the drag force of the purge gas. Therefore, a process operated in the expanded bed mode can insure that each solid in the expanded bed will be swept by the purge gas and thus offer an excellent solid-gas contact situation.

Broadly contemplated the present invention provides a process for removing unpolymerized gaseous monomers from a solid olefin polymer containing said gaseous monomers which comprises:

(a) conveying said polymer to a purge vessel said purge vessel having a discharge end, and being provided with at least one substantially vertically disposed grid plate positioned substantially transversely across said vessel, said grid plate defining openings in an amount and size sufficient to permit passage of solid olefin polymer and an inert gas through said at lease one grid plate;

(b) feeding an inert purge gas to said purge vessel and through said openings in said grid plate, in countercurrent contact with said polymer said inert purge gas being utilized in an amount and at a velocity sufficient to form a fully expanded bed in said purge vessel;

(c) continuing countercurrent contact of said polymer and said purge gas in said expanded bed for a time sufficient to substantially decrease the amount of unpolymerized gaseous monomers contained in said polymer;

(d) cyclically adjusting the amount and velocity of inert gas fed to said vessel to permit non-expanded bed operation and to permit solids containing reduced amounts of monomers to pass through said openings in said grid plate and to settle towards said discharge end;

(e) discharging a gaseous stream from said vessel containing unpolymerized gaseous monomers removed in step (c) and

(f) discharging polymer solids, containing reduced amounts of unpolymerized gaseous monomers through said discharge end.

In a preferred aspect, the present invention is directed to the purging of ethylene, propylene diene monomer (EPDM) resin to reduce the amount of diene monomer such as ethylidenenorbornene (ENB) present in said resin.

## BRIEF DESCRIPTION OF THE DRAWINGS

Fig. 1 is a representation of a purge vessel system which can be employed in the present invention with certain parts broken away to reveal interior details.

Fig. 2 is a plan view of a grid plate used in the purge vessel of Fig. 1

Fig. 3 illustrates that the expanded bed can only be operated in a narrow gas superficial velocity range.

Fig. 4 is a plan view of a gas distributor which can be employed in the purge vessel.

## DETAILED DESCRIPTION OF THE INVENTION

The solid olefin polymers to be purged can be produced by a variety of well known techniques. A particularly preferred technique is to produce the solid olefin polymers by a gas phase fluidized bed process which utilizes a fluid bed reactor such as described in U.S. Patent No. 4,482,687.

For purposes of ease of description only, the present invention will be described herein with particular reference to EPDM terpolymers where applicable, although it is to be expressly understood that the invention is not to be limited thereby. Rather, it is the intention to be limited only by the scope of the claims appended hereto. For example, the gas purging process of the present invention may be employed to purge solid olefin polymers other than EPDM terpolymers such as low pressure low density ethylene copolymers. The invention is preferably practiced with sticky polymers which have been rendered "non-sticky" such as by the process disclosed in U.S. Patent 4,994,534 issued February 19, 1991.

Examples of sticky polymers, which can be purged by the process of the present invention include ethylene/propylene rubbers and ethylene/propylene/diene termonomer rubbers, polybutadiene rubbers, high ethylene content propylene/ethylene block copolymers, poly (1-butene) (when produced under certain reaction conditions), very low density (low modulus) polyethylenes i.e., ethylene butene rubbers or hexene containing terpolymers, and ethylene/propylene/ethylidenenorbornene terpolymers of low density.

Depending upon the conditions of reaction and the particular diene monomer, the resulting EPDM terpolymer can contain an amount of gaseous unpolymerized monomers, (which may include ethylene, propylene, and e.g., ethylidene norbornene).

Environmental restrictions may prevent the direct venting to the atmosphere of such materials and more importantly, health and safety considerations generally require that these materials be substantially removed from the solid polymer. The present invention may be employed to accomplish these desired objectives.

The process of the present invention is believed to involve only a physical process i.e., the monomer gases are only entrained or otherwise contained within and between the resin particles and diffuse out into a countercurrent gas purge stream. The diffusion of the monomer gases into the purge gas occurs until an equilibrium is established between the monomer concentration in the resin and in the purge gas. A large difference between monomer concentrations in the resin and in the purge stream obviously favors a high rate of diffusion. In addition, the rate of diffusion is dependent to a degree upon the temperature and pressure within the purge vessel, with higher temperatures favoring higher diffusion rates and therefore lower residence times in the purge vessel and with lower pressures also favoring higher rates of diffusion. The rate of diffusion also depends on the resin particle size and particle morphology, with the rate being higher for smaller particle sizes. Therefore, depending upon the initial monomer concentration in the resin and the final concentration desired, the residence time of the resin in the purge vessel can be determined using known mass transfer techniques based on the resin temperature, particle size distribution and morphology, rate of flow of purge gas, the pressure in the purge vessel, and the size of the purge vessel. In general for EPDM materials, when processing a particle size of about .025 inches average particle size having a temperature of about 60°C and at a purge gas velocity of about .5 ft/second, a residence time on the order of about three hours is generally preferred to reduce the monomer concentration to a safe and environmentally acceptable value. It is preferred to feed to the purge vessel a purge gas which contains as little as possible or no hydrocarbons. Of course, economic considerations also affect the design of the purge vessel. Those skilled in the art will be able to practice the present invention based upon the more detailed discussions contained hereinbelow, and using standard chemical engineering techniques.

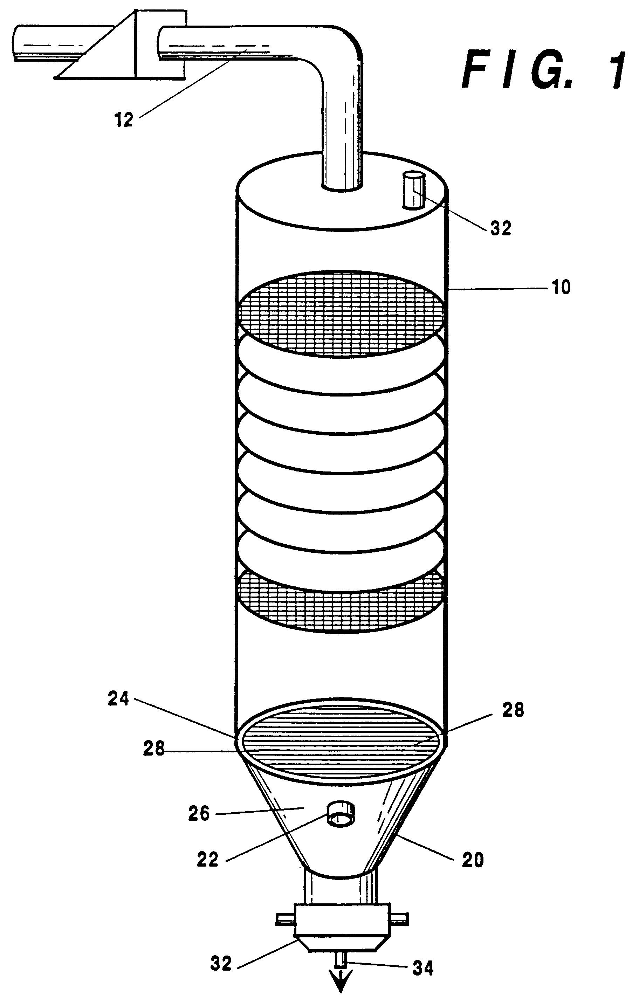

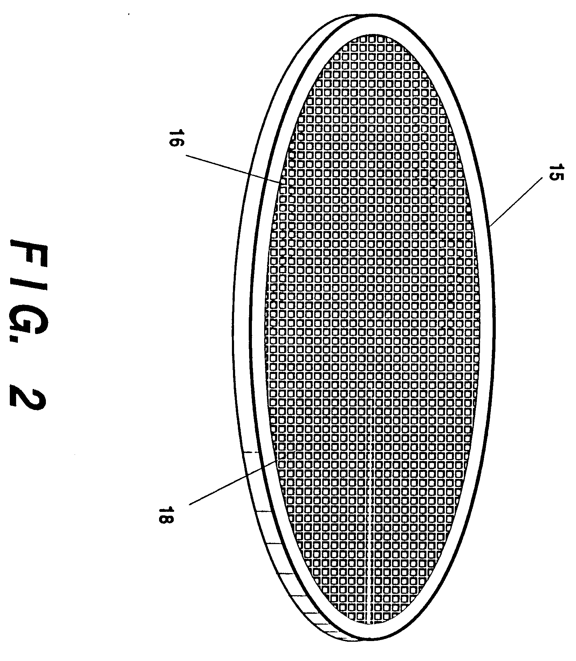

The drawing and particularly Fig. 1 illustrates a preferred embodiment of the process of the invention. Referring to Fig. 1 a purge vessel or tank 10 is shown which is provided with entry means for a solid polymer (resin) from a reactor and which must be purged to remove unpolymerized gaseous monomers. The solid polymer is introduced into vessel 10 with a conveying gas which passes through conduit 12 and screener 14. Vessel 10 is provided with at least one and preferably about 2 to 9 substantially vertically disposed grid plates preferably metallic grid plates 15, positioned substantially transversely across the vessel and which as shown in Fig. 2 is provided with solid bars or hollow tubes 16 to form openings 18 in an amount and size sufficient to permit passage of resin and inert gas therethrough. In general, the size of openings 18 depend upon the particle size of the solid polymer to be purged. Openings 18 should be of a size sufficient that in combination with the control of amount and velocity of inert purge gas, there is achieved expanded bed operation as contrasted to a packed bed or normal fluidized bed operation. In addition, the purged particles upon reduction of velocity of the inert gas stream should be permitted to pass through openings 18 towards the discharge end 20 of vessel 10. In general, openings 18 can be from about 15 to about 25 times and preferably about 18 to about 20 times the average diameter of the resin particle.

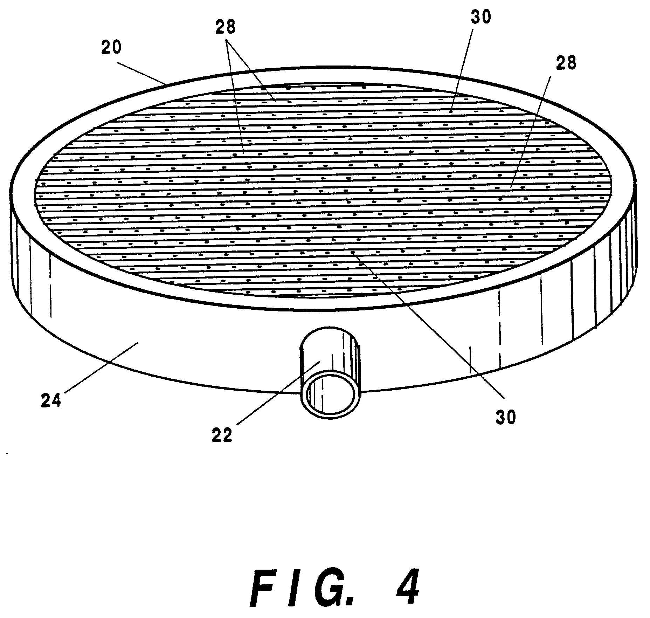

The inert purge gas is introduced into vessel 10 at its lower end through conduit 22 and is directed through a gas distributing means which serves to provide uniform purge gas distribution. A particularly preferred gas distributor is illustrated in Figs. 1 and 4 by reference numeral 24. As shown in Fig. 1 distributor 24 is positioned at the base of vessel 10 in communication with conduit 22 and at a point slightly above conical portion 26 of vessel 10. Gas distributor 24 is provided with transversely extending tubes 28 which have openings 30 through which the inert purge gas can enter the interior of purge vessel 10. The openings and pattern of openings are such as to insure that enough back pressure can be built up so that purge gas is injected through all the openings evenly.

Conventional materials handling equipment and techniques can be employed in the process of the present invention. It is preferred, however, to use a purge vessel which has a conical portion as shown by reference numeral 26 in Fig. 1. In this case, in order to obtain the preferred flow of resin, it may be necessary to utilize an inverted conical insert or other means inside the bottom of the purge vessel. The height of this insert may be adjusted in order to provide the desired effect. Such inserts are commercially available. Dust collectors can also be utilized (although not shown in the drawing). The purpose of the dust collectors is to prevent the resin particles from being carried out of the top of the purge vessel with the exiting purge gas. Conventional dust collectors, such as commercially available bag filters, can be employed. Similarly, conventional coolers and blowers can be employed to provide the necessary materials handling capability and to control the temperature and pressure of resin and purge gas.

The temperature of the resin in the purge vessel is not critical and is normally dependent upon the temperature at which it is obtained from the polymerization reaction. However, the resin temperature affects the residence times as discussed below. In the case of ethylene copolymers, the resin can be obtained in the form of solid particles directly from the polymerization reaction at a wide reaction temperature as as about 50 to 85°C. It is economically desirable not to add additional heat to the resin before feeding same to the purge vessel. It is also desirable to keep the resin temperature lower than its softening or melting point. The higher the temperature in the purge vessel, the higher the rate of diffusion of the monomer gases from the solid to the purge gas. However, economic considerations may prevent additional heat from being added to the resins. Satisfactory results can be obtained by directly feeding the resin at its reaction temperature to the purging operation, even considering the fact that its temperature may decrease or increase slightly due to the temperature of the conveying gas.

The inert purge gas is preferably fed to the bottom of the purge vessel at ambient temperature although any temperature up to about the temperature of the resin is acceptable. Pressures utilized can range from below atmospheric pressures to pressures at or in excess of atmospheric pressures up to about 1 atmosphere or greater. Selection of appropriate pressure is primarily dictated by economic considerations and porous efficiency.

The inert purge gas employed in the practice of the present invention can be any gas which is substantially inert both to the resin being purged and the particular gaseous monomers being removed although in certain cases ethylene or other hydrocarbons can be employed. The preferred purge gas is nitrogen although other gases substantially inert in the process can be employed. It is preferred that the nitrogen content of the purge gas be at least about 90% and that oxygen be excluded from the purge gas. The maximum permissible oxygen content varies depending upon the particular hydrocarbon monomer gas being stripped. As the concentration of hydrocarbons increase in the presence of oxygen, the danger of explosion also increases, and this level varies with different hydrocarbons. Ideally, there should be no oxygen in the purge gas although a small amount can be tolerated depending upon the hydrocarbon concentration in the purge vessel and the monomers being stripped. Those skilled in the art can easily determine the tolerable oxygen levels given a particular monomer. Of course, the inert purge gas may also include small amounts of the gaseous monomers, although as their concentration increases, their diffusion rate and hence the resin residence time will be affected as discussed above. Other advantages of employing relatively pure nitrogen as a purge gas are that more hydrocarbon gases can be stripped from the resin particles and any pure nitrogen that may be discharged with the exiting resins does not contribute to atmospheric emissions as would gases containing impurities. It is therefore preferred that the purge gas be pure nitrogen.

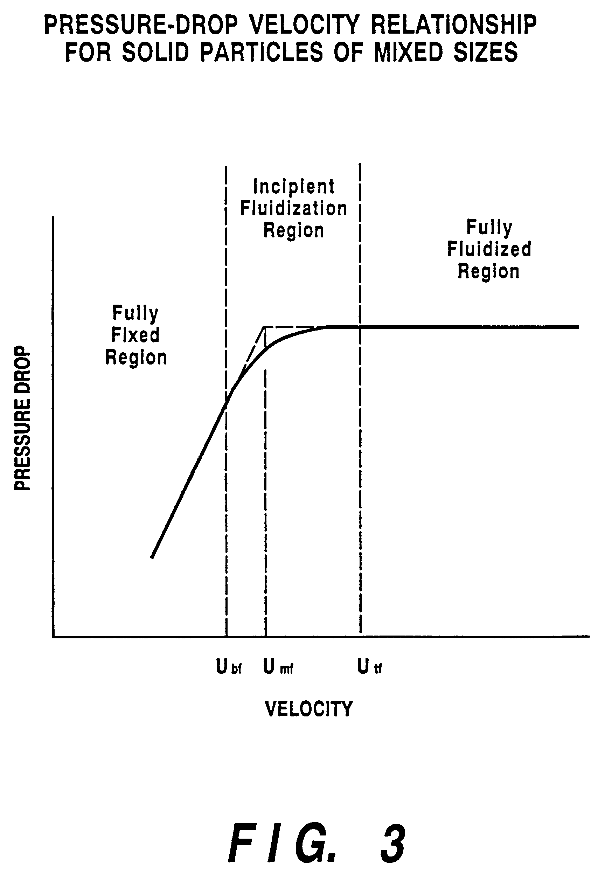

The inert purge gas is fed to purge vessel 10, through conduit 22, thence through distributor 24 and then upward through grid plates 15 in vessel 10. The purge gas countercurrently contacts the solid polymer and conveying gas entering vessel 10 through conduit 12, the purge gas being used in an amount and velocity sufficient to provide expanded bed operation. In order to achieve an expanded bed operation the velocity of inert purge gas entering vessel 10 must be regulated within certain parameters. From Fig. 3, it will be seen that the expanded bed can only be operated in a narrow gas velocity range. In Fig. 3, $U_{bf}$ represents maximum velocity for a fully packed bed; $U_{mf}$ represents the minimum fluidization velocity of the material and $U_{tf}$ represents the minimum velocity for a complete bubbling fluidized bed.

To widen the window of operation, grid plates 15 are provided in vessel 10. It has been found that these grid plates suppress the fluidization of the solid bed and extends the operation window for expanded bed operation.

An additional benefit of having grid plates 15 installed in vessel 10 is that when polymer solids pass through the grid plates, any lightly packed solid crumbs will be broken loose. This feature is very important if the solids to be purged are sticky.

In general, the velocity of inert purge gas depends on the particle size of the solid polymer and should be sufficient to establish a fully expanded bed. It has been found that the velocity of inert purge gas can range from about 0.2 to about 2ft/sec, preferably about 0.4 to about 1ft/sec.

The rate of flow of resin through the purge vessel is not critical and depends upon the minimum residence time necessary to reduce the concentration of gaseous monomers in the resin to the desired level. It is preferred to reduce the hydrocarbon monomer gas content in the resin to below about 25-50 parts per million by weight, although the extent to which the hydrocarbon monomer concentration must be reduced depends upon both environmental and safety requirements. In any event the purging process of the present invention is effective to substantially reduce the hydrocarbon monomer gas content of the solid olefin polymer.

In order to permit discharge of purged solid polymers from vessel 10, the amount and velocity of inert gas fed to the vessel must be adjusted downward to permit the solids containing the reduced amounts of monomers to pass through the openings 18 in grid plate 15 and to settle towards discharge end 20. Thus, for continuous operation, the amount and velocity of inert gas is periodically and cyclically lowered to below expanded bed operation. This permits the purged solid polymers to pass through gas distributor 24 and into rotary valve 32 for discharge through resin discharge conduit 34.

Unpolymerized gaseous monomers can be removed from vessel 10 in conventional manner such as by discharging a gaseous stream containing the unpolymerized monomers through gas discharge outlet 36 in vessel 10 where it is directed for further processing and if desired recycling as is known.

The process can be carried out in a batch or continuous mode, the latter being preferred.

The following examples will further illustrate the invention.

## EXAMPLE 1

This example demonstrates inadequate purging using packed bed operation.

A batch of an ethylene propylene ethylidenenorbornene terpolymer (EPDM) was prepared by the gas phase process disclosed in U.S. Patent 4,994,534 at a rate of 33 lb/hr. The average particle size was 0.025" with a standard deviation equal to 2. The residue of ethylidenenorbornene (ENB) in the EPDM polymer was 0.5 wt%.

After polymerization, a portion of the granular resin was transferred from the reactor to the purge vessel with a nitrogen conveying gas. The resin was deposited atop an existing resin bed in the purge vessel operated near atmospheric pressure. The bed level was maintained constant by means of a conventional level control device coupled with a rotary valve installed at the bottom of the purge bin. The operation temperature of the purge vessel was kept constant at 60°C.

With a nitrogen flow rate at 19.86 lb/hr., the gas superficial velocity in the purge vessel was 0.236 ft/s. The gas velocity was below that required to form an expanded bed in the purge vessel. The gas velocity required to expand the resin bed, in which the average particle size of the resin is equal to 0.025", without fluidizing the bed is between 0.25 and 0.48 ft/s. Thus, the present operation was a packed bed operation.

After 0.9 hours of purging, there was a failure to reduce the ENB residue from 0.5 wt% to 100 ppmw. With the purge gas channeling through the upper large section of the purge vessel, the resin in this upper layer of the vessel was not swept by the purge gas and was not purged. The concentration of ENB residue in the resin in the upper part of the vessel, was the same as the original ENB concentration in the resin transferred from the reactor.

EXAMPLE 2

This example demonstrates inadequate purging using fluidized bed operation.

A portion of the ethylene propylene ethylidenenorbornene terpolymer (EPDM) prepared in Example 1 was transferred from the reactor to the purge vessel. The resin was deposited atop an existing resin bed in the purge vessel operated near atmospheric pressure. The bed level was maintained constant by means of a conventional level control device coupled with a rotary valve installed at the bottom of the purge bin. The operation temperature of the purge vessel was kept constant at 60°C.

With a nitrogen flow rate of 39.72 lb/hr. the gas superficial velocity in the purge vessel was 0.536 ft/s. The gas velocity was above the velocity which can completely fluidize the resin bed in the purge vessel. The minimum gas velocity required to fluidize the resin bed having an average particle size of the resin of about 0.025" was 0.48 ft/s. The present operation was a completely fluidized bed operation.

After 1.2 hours of purging, there was a failure to reduce the ENB residue from 0.5 wt% to 100 ppmw. Due to the severe solid backmixing in the fluidized bed, the physical properties were expected to be homogeneous in the bed and in fact were. The concentration of ENB residue in the resin however remained the same.

EXAMPLE 3

This example demonstrates the successful purging of ENB by practicing the process of the invention.

A portion of the ethylene propylene ethylidenenorbornene terpolymer prepared in Example 1 was transferred from the reactor to the purge vessel. The resin was deposited atop an existing resin bed in the purge vessel operated near atmospheric pressure. There were six grid plates having openings about 20 times the diameter of the resin installed in the purger to suppress the bubbling flow of the resins bed. The bed level was maintained constant by means of a conventional level control device coupled with a rotary valve installed at the bottom of the purge bin. The operation temperature of the purge vessel was kept constant at 60°C.

With a nitrogen flow rate at 44.8 lb/hr., the gas superficial velocity in the purge vessel was 0.53 ft/s. The gas velocity was above the velocity which can completely fluidize the resin bed in the purge vessel. However, instead of operating the purger in a fluidized bed mode, the inserted grid plate suppressed the fluidization of the resin bed and permitted operation of the purger in an expanded bed counter-current mode.

After 1.2 hours of purging, the present operation successfully reduced the ENB residue from 0.5 wt% to below 100 ppmw. With purge gas sweeping uniformly through the resin bed, the concentration of ENB residue in the resin was gradually purged out when the resin travelled down the purger.

EXAMPLE 4

This example demonstrates the successful purging of ENB by practicing the process of the invention.

A portion of the ethylene propylene ethylidenenorbornene terpolymer from the portion separated in Example 1 was transferred from the reactor to the purge vessel. The resin was deposited atop an existing resin bed in the purge vessel operated near atmospheric pressure. There were six grid plates having openings about 20 times the diameter of the resin installed in the purger to suppress the bubbling flow of the resins bed. The bed level was maintained constant by means of a conventional level control device coupled with a rotary valve installed at the bottom of the purge bin. The operation temperature of the purge vessel was kept constant at 60°C.

With a nitrogen flow rate at 44.8 lb/hr., the gas superficial velocity in the purge vessel was 0.53 ft/s. The gas velocity was above the velocity which can completely fluidize the resin bed in the purge vessel. However, instead of operating the purger in a fluidized bed mode, the inserted grid plates suppressed the fluidization of the resin bed and permitted operation of the purger in an expanded bed counter-current mode.

After 1.7 hours of purging, the present operation successfully reduced the ENB residue from 0.5 wt% to below 100 ppmw. With purge gas sweeping uniformly through the resin bed, the concentration of ENB residue in the resin was gradually reduced out while the resin travelled down the purger.

EXAMPLE 5

This example demonstrates the successful purging of ENB by practicing the process of the invention.

A portion of the ethylene propylene ethylidenenorbornene terpolymer prepared in Example 1 was transferred from the reactor to the purge vessel. The resin was deposited atop an existing resin bed in the purge vessel operated near atmospheric pressure. There were six grid plates having openings about 20 times the diameter of the resin installed in the purger to suppress the bubbling flow of the resins bed. The bed level was maintained constant by means of a conventional level control device coupled with a rotary valve installed at the bottom of the purge bin. The operation temperature of the purge vessel was kept constant at 80°C.

With a nitrogen flow rate at 44.8 lb/hr., the gas superficial velocity in the purge vessel was 0.53 ft/s. The gas velocity was above the velocity which can completely fluidize the resin bed in the purge vessel. However, instead of operating the purger in a fluidized bed mode, the inserted grid plate suppressed the fluidization of the resin bed and permitted operation of the purger in an expanded bed counter-current mode.

After 0.268 hours of purging, the present operation successfully reduced the ENB residue from 0.5 wt% to below 100 ppmw. With purge gas sweeping uniformly through the resin bed, the ENB in the resin was gradually purged out while the resin travelled down the purger.

Example 6

This example demonstrates the successful purging of ENB in a continuous operation mode, by practicing the process of the invention.

A portion of the ethylene Propylene ethylidenenorbornene terpolymer prepared in Example 1 was transferred from the reactor to the purge vessel. The resin was deposited atop an existing resin bed in the purge vessel operated near atmospheric pressure. There were six grid plates having openings about 20 times the diameter of the resin installed in the purger to suppress the fluidizability of the resins bed. The bed level was maintained constant by means of a conventional level control device coupled to a rotary valve installed at the bottom of the purge bin. The operation temperature of the purge vessel was kept constant at 80°C. The flow rate of the purge gas was adjusted cyclically to allow the resin to be discharged periodically and thus constitute a continuous operation. The flow rate of the purge gas was decreased to 15 lb/hr. before the resin was discharged, and was increased back to 33.6 lb/hr. after the resin was discharged.

With a nitrogen flow rate at 33.6 lb/hr., the gas superficial velocity in the purge vessel was 0.41 ft/s which was in the range that the purge gas can expand the resin bed in the purge vessel, but not fluidize the bed. The present operation was thus an expanded bed counter-current operation.

After 0.268 hours of purging, the present operation successfully reduced the ENB residue from 0.5 wt.% to below 100 ppmw. With purge gas sweeping uniformly through the resin bed, the concentration of ENB residue in the resin was gradually purged out when the resin travelled down the purger.

**Claims**

1. A process for removing unpolymerized gaseous monomers from a solid olefin polymer containing said gaseous monomers which comprises:

(a) conveying said polymer to a purge vessel said purge vessel having a discharge end, and being provided with at least one substantially vertically disposed grid plate positioned substantially transversely across said vessel, said grid plate defining openings in an amount and size sufficient to permit passage of solid olefin polymer and an inert gas through said at lease one grid plate;

(b) feeding an inert purge gas to said purge vessel and through said openings in said grid plate, in countercurrent contact with said polymer said inert purge gas being utilized in an amount and at a velocity sufficient to form a fully expanded bed in said purge vessel;

(c) continuing countercurrent contact of said polymer and said purge gas in said expanded bed for a time sufficient to substantially decrease the amount of unpolymerized gaseous monomers contained in said polymer;

(d) discharging a gaseous stream from said vessel containing unpolymerized gaseous monomers removed in step (c) and

(e) discharging polymer solids, containing reduced amounts of unpolymerized gaseous monomers through said discharge end.

2. A process according to claim 1 wherein the amount and velocity of inert purge gas fed to said vessel is cyclically adjusted to permit solids containing reduced amounts of monomers to pass through said openings and to be discharged from said discharge end.

3. A process according to claim 1 or 2 wherein said solid olefin polymer is an ethylene propylene diene monomer resin.

4. A process according to claim 1 or 2 wherein said solid olefin polymer is an ethylene propylene ethylidenenorbornene resin.

5. A process according to any of claims 1 - 4 wherein said purge vessel contains about 2 to 9 substantially vertically disposed grid plates.

6. A process according to any of claims 1 - 5 wherein each of said openings in said grid plate is about 15 to about 25 times the average diameter of said solid olefin polymer.

7. A process according to any of claims 1 - 6 wherein said inert purge gas is nitrogen.

8. A process according to any of claims 1 - 7 wherein said inert purge gas is fed to said purge vessel at a velocity of about 0.2 to about 2 ft/sec.

9. A process according to any of claims 1 - 8 wherein said inert purge gas is passed through a gas distributor means positioned in said vessel above said discharge end.

10. A process according to claim 9 wherein said gas distributor means is a gas distributor provided with transversely extending tubes defining openings through which said inert purge gas enters the interior of said purge vessel.

*F I G. 1*

15

16

18

# FIG. 2

## PRESSURE-DROP VELOCITY RELATIONSHIP
## FOR SOLID PARTICLES OF MIXED SIZES

# F I G.  3

FIG. 4